# FASCICULE DE BREVET EUROPEEN

(11) **EP 1 296 846 B1**
(45) Date de publication et mention de la délivrance du brevet: **25.10.2006**
(21) Numéro de dépôt: 02738230.8
(22) Date de dépôt: 10.05.2002
(51) Int. Cl.: B60J 10/00

(54) **PROFILE D'ETANCHEITE APTE A COIFFER UNE PARTIE SAILLANTE D'UNE STRUCTURE, EBAUCHE DE CE PROFILE ET PROCEDE DE MISE EN PLACE DE CETTE EBAUCHE SUR LA PARTIE SAILLANTE**
DICHTUNGSPROFIL GEEIGNET ZUM KAPSELN VON EINEM VORSPRINGENDEN STRUKTURTEIL, ZUSCHNITT DIESES PROFILS UND VERFAHREN FÜR DAS AUFBRINGEN DIESES PROFILS AN DEM VORSPRINGENDEN TEIL
SEALING EXTRUDED SECTION FOR BEING MOUNTED ON A PROJECTING PART OF A STRUCTURE, BLANK OF SAID SECTION AND METHOD FOR FIXING SAID BLANK ON THE PROJECTING PART

(30) Priorité: 09.05.2001 FR 0106116
(43) Date de publication de la demande: 02.04.2003
(73) Titulaire: Metzeler Automotive Profile Systems Transieres S.A., 92000 Nanterre (FR)
(72) Inventeur: DRON, Bernard, F-92800 Puteaux (FR)
(74) Mandataire: Jolly, Jean-Pierre
(86) Numéro de dépôt international: PCT/FR2002/001584
(87) Numéro de publication internationale: WO 2002/090137

(56) Documents cités:
- EP-A- 0 754 596
- DE-A- 1 555 062
- GB-A- 841 029
- US-A- 2 609 070
- US-A- 2 637 880
- US-A- 3 002 783

## Description

La présente invention concerne un profilé d'étanchéité selon le préambule de la revendication 1, à section transversale en U, en élastomère ou en plastomère, dépourvu d'armature rigide, notamment d'armature métallique. Elle a plus particulièrement pour objet un profilé formant pince de ce type, destiné à coiffer une partie saillante d'une structure, notamment un bord saillant d'un encadrement d'une ouverture de carrosserie d'un véhicule automobile, en particulier un encadrement de porte ou de coffre de cette carrosserie.

L'invention a également pour objet une ébauche d'un tel profilé et un procédé de mise en place de cette ébauche sur la partie saillante de la structure associée pour réaliser le profilé et le rendre simultanément solidaire de cette partie.

Les profilés à section en U formant pince comportent habituellement au moins un élément d'étanchéité attenant à la base ou à une branche du U et faisant saillie vers l'extérieur, de manière à être comprimé entre l'encadrement de l'ouverture équipée de ce profilé et l'ouvrant associé, lorsque celui-ci est en position de fermeture, et à assurer ainsi l'étanchéité et l'insonorisation au niveau de cette ouverture.

Pour assurer un pinçage efficace de la feuillure qu'ils coiffent, ces profilés ont longtemps comporté une armature métallique à section en U au moins partiellement noyée dans le plastomère ou l'élastomère dont ils sont constitués et, pour éviter une désolidarisation accidentelle du profilé et de la feuillure associée, les ailes du profilé correspondant aux branches du U comprennent généralement des lèvres faisant saillie obliquement à partir de leur surface tournée vers l'autre aile en direction de celle-ci.

Dans le même but, les utilisateurs de ces profilés, en particulier lorsque ceux-ci sont dépourvus d'armature métallique, prévoient de les rendre solidaires par collage sur les feuillures qu'ils équipent et, à cet effet, ils emploient habituellement des colles du type dit "hot melt", qui sont dures à la température ambiante, mais qui se ramollissent par chauffage. Ils doivent donc enduire sur place et à chaud la face interne de la base du profilé et/ou la ou les parties contiguës des ailes d'une telle colle, puis coiffer la feuillure à équiper avec le profilé ainsi muni de colle, après réchauffement, pour ramollir l'adhésif et lui permettre de fluer entre le profilé et la feuillure, et laisser enfin refroidir l'ensemble pour durcir l'adhésif et solidariser ainsi le profilé et la feuillure.

Ces opérations sont relativement banales, mais les utilisateurs déplorent cependant de devoir procéder eux-mêmes au réchauffement de l'adhésif et de ne pas disposer de profilés susceptibles d'être mis en place directement sur les feuillures associées, sans avoir recours à cette opération préalable fastidieuse.

On connaît aussi, par FR 2 633 361 A, un joint d'étanchéité en une matière souple extrudée, ayant une section transversale dont la forme générale est celle d'un U ou d'un Ω, dans le fond duquel est logée une substance adhésive telle qu'un mastic. Ce profilé est destiné à coiffer une feuillure ou un bord saillant, qui pénètre ainsi dans la substance adhésive, mais celle-ci durcit ensuite naturellement, en adhérant ainsi à la feuillure ou au bord saillant, ce qui peut nécessiter une durée considérable.

Pour remédier à cet inconvénient, il a déjà été proposé de rapporter à l'intérieur du profilé formant pince un cordon d'une colle à l'état pâteux apte à être durcie par une opération commandée, par exemple par chauffage à l'aide d'un conducteur électrique noyé dans la masse du profilé ou dans le cordon de colle (voir EP 1 060 927 A et EP 1 080 967 A, qui appartiennent tous deux à la Demanderesse). Avec de tels profilés, on coiffe la partie saillante à équiper de façon telle qu'elle pénètre dans le cordon de colle à l'état pâteux et l'on provoque ensuite le durcissement de cette colle.

La présente invention s'intéresse elle aussi à des profilés formant pince dépourvus d'armature métallique, mais elle vise à proposer des profilés de ce type ne comportant aucun organe métallique et, par conséquent, pas de conducteurs métalliques permettant de provoquer le durcissement d'une colle pâteuse apte à être durcie par chauffage.

Dans ce but, l'invention propose donc de supprimer dans de tels profilés l'utilisation d'une colle pâteuse durcissable à la chaleur et de rendre le profilé solidaire de la partie saillante qu'il est destiné à équiper par un simple effort mécanique de pincement de cette partie.

Ce but est réalisé par un profilé d'étanchéité caractérisé en ce qu'il comprend :
- deux coquilles en élastomère ou en plastomère, comprenant chacune une aile et une partie attenante constituant une portion de la base du profilé, ces deux coquilles étant de préférence disposées de façon sensiblement symétrique suivant une coupe transversale du profilé et étant séparées l'une de l'autre par une ouverture pratiquée à travers la base du profilé et s'étendant longitudinalement suivant la partie médiane de celle-ci ;
- une couche d'un matériau souple non ou peu extensible, appliqué à l'intérieur des deux coquilles de manière à rendre solidaires les deux ailes et les parties attenantes de la base du profilé de chacune d'entre elles ;
- une cale formant coin, de section transversale sensiblement analogue à celle de l'ouverture séparant les coquilles, dans laquelle elle est engagée à force, la section transversale de l'ouverture étant telle que, lors de la mise en place de la cale, elle provoque, du fait de la couche de matière souple réunissant les deux coquilles, un mouvement de basculement de ces coquilles l'une par rapport à l'autre, qui rapproche les extrémités libres des deux ailes du profilé.

Avantageusement la cale formant coin et les coquilles sont en un même matériau et venues d'extrusion.

La couche de matériau souple non ou peu extensible réunissant les deux coquilles peut avoir une dureté SHORE A d'environ 80 à 90. Elle peut, par exemple, être en caoutchouc semi-dur.

Dans cette couche peut avantageusement être noyée une nappe ou un tissu en un matériau non extensible, par exemple en polypropylène, qui évite ainsi les risques d'allongement de cette couche.

Pour assurer une parfaite étanchéité au niveau de la partie saillante coiffée par le profilé, celui-ci peut comporter avantageusement une couche de mastic appliquée sur la couche de matériau souple peu ou pas extensible et dans lequel peut ainsi être noyée l'arête de la partie saillante. Ce mastic peut prendre appui latéral sur des lèvres faisant saillie à partir de l'aile de chaque coquille en direction de l'aile de l'autre coquille.

L'invention a également pour objet une ébauche de ce profilé, dans laquelle la cale formant coin n'est pas engagée dans l'ouverture séparant les deux coquilles, mais est éventuellement attenante à celles-ci, si, comme il est préférable, elles sont venues d'une co-extrusion. Dans ce cas, lors de la mise en place de la cale dans l'ouverture, les liens venus d'extrusion qui réunissent la cale et les demi-coquilles peuvent être rompus, du fait de l'effort exercé sur la cale lors de la mise en place de celle-ci.

L'invention a enfin pour objet un procédé de mise en place de cette ébauche de profilé sur une partie saillante d'une structure, notamment d'un encadrement d'une ouverture d'une carrosserie d'automobile, en vue de réaliser simultanément le profilé ci-dessus à partir de l'ébauche qui vient d'être définie et de le rendre solidaire de cette partie, ce procédé étant caractérisé en ce que :
- on coiffe la partie saillante avec ladite ébauche, avec les deux coquilles disposées de part et d'autre de la partie saillante et l'ouverture séparant les deux coquilles sensiblement en regard de la partie saillante ;
- et on enfonce ensuite la cale formant coin dans l'ouverture, de manière à déplacer en direction l'une de l'autre par un effet de basculement les extrémités libres des deux coquilles, pour pincer fermement la partie saillante.

Le mise en place de la cale formant coin dans l'ouverture séparant les demi-coquilles peut être effectuée à l'aide d'un galet venant presser la cale ou d'un marteau à tête vibrante. Pendant cette opération, les ailes des deux coquilles peuvent avantageusement être elles aussi sollicitées en direction l'une de l'autre à l'aide de galets entraînés en rotation appliqués contre leur face externe, comme dans les procédés connus dans la technique sous l'appellation de "roll-forming", ce qui facilite l'introduction de la cale dans son logement.

La mise en oeuvre de l'invention va être décrite ci-après plus en détail, en référence aux dessins schématiques annexés. Sur ces dessins :
La figure 1 est une coupe transversale d'une première forme de réalisation d'une ébauche du joint conforme à l'invention ;
La figure 2 illustre la réalisation d'un joint conforme à l'invention à partir de l'ébauche de la figure 1 et sa mise en place simultanée sur une partie saillante d'un encadrement d'une ouverture de coffre d'automobile ;
La figure 3 est une vue de détail d'une variante de la figure 1 ;
La figure 4 est une vue en coupe transversale d'une autre forme de réalisation du joint conforme à l'invention en position sur une partie saillante d'un encadrement d'une ouverture de coffre d'automobile ;
La figure 5 est une vue analogue à la figure 1 d'une autre ébauche d'un joint conforme à l'invention.

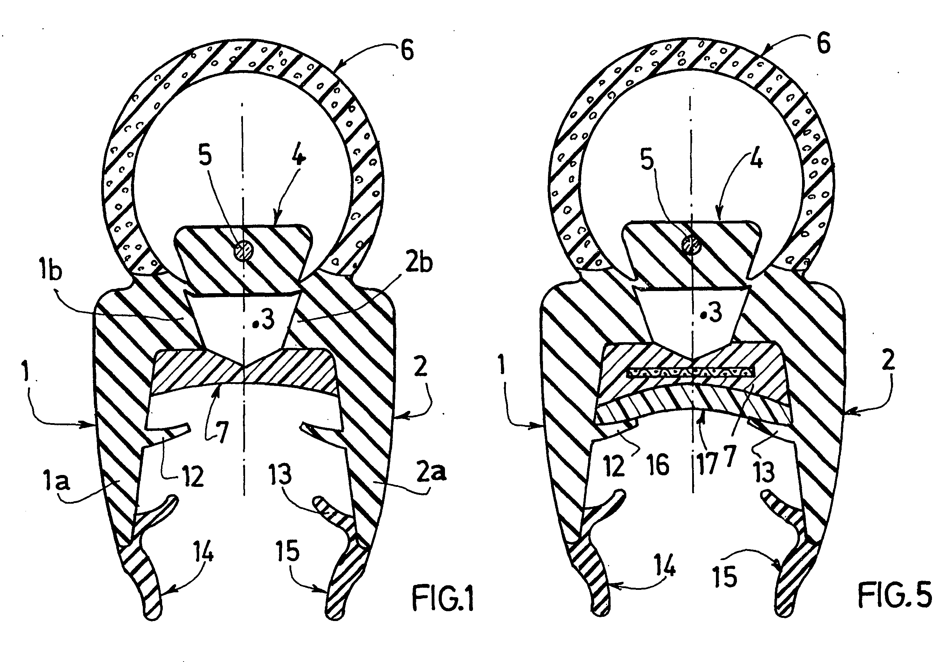

L'ébauche du joint d'encadrement d'un coffre d'automobile représentée en coupe transversale sur la figure 1 a été réalisée par co-extrusion. Elle comprend deux coquilles 1 et 2 séparées par une ouverture longitudinale 3, dans laquelle peut être engagée à force une cale 4 formant coin, de profil complémentaire, qui est ici en le même matériau que les coquilles 1 et 2 et est reliée latéralement à celles-ci par des liens venus d'extrusion, qui ici sont rompus lors de la mise en place de la cale.

Les coquilles 1 et 2 sont disposées symétriquement, en coupe transversale, et forment avec la cale 4, après mise en place de celle-ci, un profilé à section en U. Chaque coquille comporte dans ce but une aile, respectivement 1a, 2a, correspondant à une branche du U et une partie attenante, respectivement 1b, 2b, constituant une partie de la base du U contiguë à la cale 4. L'ouverture 3 et la cale 4 sont disposées longitudinalement dans la partie médiane du profilé.

Dans la cale 4 est prévu de façon usuelle un fil 5 en fibre de verre, tandis qu'un profilé tubulaire 6 d'étanchéité, par exemple en caoutchouc cellulaire, est attenant aux parties 1a et 2a, des coquilles 1 et 2, avec lesquelles il a été co-extrudé.

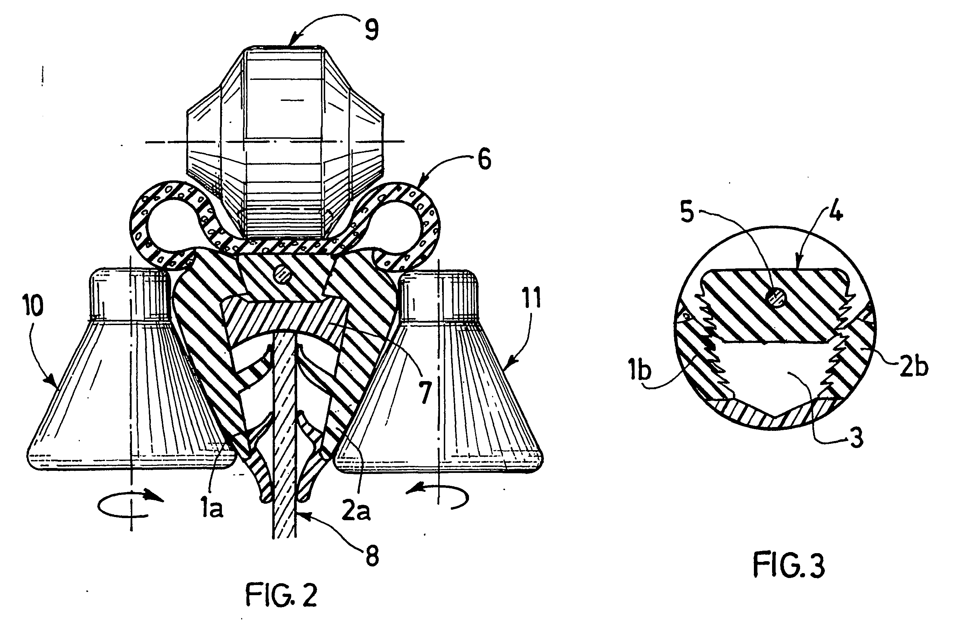

Conformément à l'invention, une couche 7 d'un matériau non ou peu extensible, par exemple du caoutchouc semi-dur, réunit les ailes 1a et 2a des coquilles 1 et 2 et est appliquée contre les parties 1b et 2b, dont elle est également solidaire, transversalement à l'ouverture 3. Cette ouverture 3 et la cale 4 formant coin ont une section telle - ici, une section en forme de trapèze isocèle dont la petite base est disposée à l'entrée de l'ouverture 3 - que lorsque la cale 4 est introduite à force dans l'ouverture 3 en écartant l'une de l'autre les parties 1b et 2b, elle provoque un mouvement de pivotement relatif des ailes 1a et 2a, puisque celles-ci sont réunies par le matériau non extensible, avec pour conséquence un rapprochement des bords libres de ces ailes, qui peuvent ainsi venir pincer fermement une feuillure 8 que chevauche le profilé, comme on le voit sur la figure 2.

Comme représenté sur cette figure 2, l'introduction de la cale 4 peut être effectuée à l'aide d'un galet 9 entraîné ou non en rotation, tandis que les ailes 1a et 2a des coquilles 1 et 2 sont simultanément sollicitées en direction l'une de l'autre par des galets 10 et 11 également entraînés en rotation, qui compriment leur surface latérale en facilitant ainsi la mise en place de la cale 4. Le galet 9 peut avantageusement être animé d'un mouvement alternatif perpendiculairement à la cale.

Les lèvres 12, 13, 14, 15, qui font saillie à partir des parties 1a et 1b en direction de la partie opposée viennent ainsi s'appliquer contre la feuillure 8 pour éviter que le profilé ainsi réalisé ne se désolidarise d'elle. On notera que les lèvres 14 et 15, disposées par exemple suivant le bord libre des parties 1a et 2a, sont des lèvres doubles à section en forme d'accent circonflexe, qui assurent ainsi une adhérence accrue contre la feuillure 8.

Ce profilé est donc maintenu en position sur la feuillure 8 par un simple effet mécanique, sans utilisation d'une colle pâteuse dont on provoquerait le durcissement par passage d'un courant électrique dans des fils métalliques disposés dans cette colle ou dans les parties contiguës du profilé.

L'arête de la feuillure 8 peut être séparée par un intervalle de la couche 7 de matériau non extensible ou venir sensiblement au contact de celle-ci.

On notera que la cale 4 formant coin comporte, suivant les bords de son extrémité la plus proche de la couche 7, des parties en saillie qui viennent s'encliqueter au-dessous des parties 1b et 2b pour la verrouiller en position dans son logement.

Comme on le voit sur la figure 3, les bords latéraux de la cale 4 et les surfaces contiguës de l'ouverture 3 peuvent aussi comporter des stries, qui s'opposent à une extraction accidentelle de la cale de son logement.

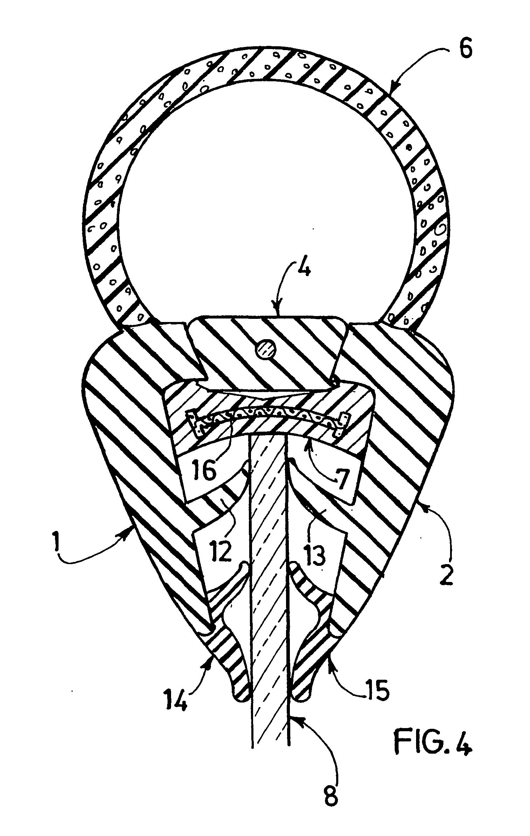

La figure 4, sur laquelle les organes déjà décrits sont désignés par les mêmes chiffres de référence, représente une autre forme de réalisation du joint conforme à l'invention, qui ne diffère de celle de la figure 1 que par l'incorporation dans le matériau peu ou pas extensible de la couche 7 d'une bande de tissu ou d'une nappe en un matériau non extensible, par exemple en polypropylène, qui réduit encore les risques d'allongement de cette couche 7.

La figure 5, sur laquelle les organes déjà décrits sont à nouveau désignés par les mêmes chiffres de référence, représente une autre forme de réalisation de l'invention, dans laquelle une couche de mastic mou 17, ici supportée latéralement par les ailes 12 et 13, est appliquée contre la couche 7 en matériau non extensible. La feuillure qu'est destiné à coiffer le profilé pénètre dans cette couche de mastic et l'on obtient ainsi une parfaite étanchéité entre cette feuillure et le profilé.

Toutes les réalisations décrites ci-dessus concernent un joint pour coffre d'automobile, mais il est clair que l'invention s'applique aussi bien à des joints pour encadrement de porte d'automobile, l'organe d'étanchéité étant dans ce cas attenant latéralement à l'une des coquilles du profilé.

Les profilés conformes à l'invention sont dépourvus de tout organe métallique et sont ainsi moins coûteux que ceux comportant une armature de la technique antérieure. Ils sont aussi plus légers que ces derniers et par conséquent d'un emploi plus aisé.

## Revendications

1. Profilé d'étanchéité à section transversale en U ou en Ω, en élastomère ou en plastomère, dépourvu d'armature rigide noyée au moins partiellement dans sa masse, ce profilé comportant éventuellement un organe d'étanchéité (6) attenant à sa base ou à l'une de ses branches et faisant saillie vers l'extérieur de celle-ci, ce profilé étant destiné à coiffer en la pinçant fermement une partie saillante (8) d'une structure, notamment d'un encadrement d'une ouverture d'une carrosserie d'automobile, et étant **caractérisé en ce qu'**il comprend :
- deux coquilles (1, 2) en élastomère ou en plastomère, comprenant chacune une aile (1a, 2a) et une partie attenante (1b, 2b) constituant une portion de la base du profilé, ces deux coquilles étant de préférence disposées de façon sensiblement symétrique suivant une coupe transversale du profilé et étant séparées l'une de l'autre par une ouverture (3) pratiquée à travers la base du profilé et s'étendant longitudinalement suivant la partie médiane de celle-ci ;
- une couche (7) d'un matériau souple non ou peu extensible, appliqué à l'intérieur des deux coquilles (1, 2) de manière à rendre solidaires les deux ailes (1a, 2a) et les parties attenantes (1b, 2b) de la base du profilé de chacune d'entre elles ;
- une cale (4) formant coin, de section transversale sensiblement analogue à celle de l'ouverture (3) séparant les coquilles (1, 2), dans laquelle elle est engagée à force, la section transversale de l'ouverture (3) étant telle que, lors de la mise en place de la cale (4), elle provoque, du fait de la couche (7) de matière souple réunissant les deux coquilles, un mouvement de basculement de ces coquilles l'une par rapport à l'autre, qui rapproche les extrémités libres des deux ailes du profilé.

2. Profilé selon la revendication 1, **caractérisé en ce que** la cale (4) formant coin et les coquilles (1, 2) sont venues d'une opération de co-extrusion.

3. Profilé selon l'une des revendications 1 et 2, **caractérisé en ce que** le matériau non ou peu extensible a une dureté SHORE A d'environ 80 à 90.

4. Profilé selon l'une des revendications 1 à 3, **caractérisé en ce qu'**une nappe ou un tissu (16) en un matériau non extensible est noyé dans la couche (7) de matériau peu ou pas extensible.

5. Profilé selon l'une des revendications 1 à 4, **caractérisé en ce qu'**une couche de mastic mou (17) est appliquée contre la couche (7) en matériau non extensible entre les ailes (1a, 2a) des coquilles (1, 2).

6. Ebauche du profilé selon l'une des revendications 1 à 5, **caractérisée en ce que** la cale (4) formant coin n'est pas engagée dans l'ouverture (3) séparant les deux coquilles (1, 2), mais est éventuellement attenante à celle-ci.

7. Procédé de mise en place de l'ébauche du profilé selon la revendication 6 sur une partie saillante (8) d'une structure, notamment d'un encadrement d'une ouverture d'une carrosserie d'automobile, en vue de réaliser simultanément le profilé correspondant et de le rendre solidaire de cette partie saillante, ce procédé étant **caractérisé en ce que** :
- on coiffe la partie saillante (8) avec ladite ébauche, avec les deux coquilles (1, 2) disposées de part et d'autre de la partie saillante et l'ouverture (3) séparant les deux coquilles sensiblement en regard de la partie saillante ;
- et on enfonce ensuite la cale (4) formant coin dans l'ouverture (3), de manière à déplacer en direction l'une de l'autre par un effet de basculement les extrémités libres des deux coquilles (1, 2), en vue de pincer fermement la partie saillante (8).

8. Procédé selon la revendication 7, **caractérisé en ce que** la cale (4) formant coin est introduite à force dans son logement à l'aide d'un galet (9) entraîné en rotation ou d'un marteau vibrant.

9. Procédé selon la revendication 8, **caractérisé en ce que**, simultanément, les ailes (1a, 2a) des coquilles (1, 2) sont comprimées latéralement en direction l'une de l'autre par des galets (10, 11) entraînés en rotation.

## Claims

1. Sealing strip with U or Ω transverse section, made from elastomer or plastomer, with no rigid reinforcement embedded at least partially in its mass, this strip optionally including a sealing member (6) attaching to its base or to one or of its branches and projecting towards the outside thereof, this strip being designed to cap, by firmly pinching, a projecting part (8) of a structure, particular a frame of an opening in automobile bodywork, and being **characterized in that** it comprises:
- two shells (1, 2), made from elastomer or plastomer, each comprising a flange (1a, 2a) and an attaching part (1b, 2b) forming a portion of the base of the strip, these two shells preferably being arranged substantially symmetrically in accordance with a transverse section of the strip and being separated from one another by an opening (3) made through the base of the strip and extending longitudinally in accordance with the median part thereof;
- a layer (7) of a flexible material that is at most barely extendible, applied inside the two shells (1, 2) so as to secure the two flanges (1a, 2a) and the attaching parts (1b, 2b) of the base of the strip of each of them;
- a block (4) forming a wedge, with a transverse section substantially similar to that of the opening (3) separating the shells (1, 2) in which it is forcibly engaged, the transverse section of the opening (3) being such that, upon positioning of the block (4), it gives rise, owing to the layer (7) of flexible material joining the two shells, to a tilting movement of said shells one relative to the other that brings the free ends of the two flanges of the strip together.

2. Strip according to Claim 1, **characterized in that** the block (4) forming the wedge and the shells (1, 2) are made in a co-extrusion operation.

3. Strip according to one of Claims 1 or 2, **characterized in that** the material that is at most barely extendible has a Shore A hardness of approximately 80 to 90.

4. Strip according to one of Claims 1 to 3, **characterized in that** a ply or a lap (16) made from a non-extendible material is embedded in the layer (7) of material that is at most barely extendible.

5. Strip according to one of Claims 1 to 4, **characterized in that** a layer of soft mastic (17) is applied to the layer (7) made from non-extendible material between the flanges (1a, 2a) of the shells (1, 2).

6. Blank of the strip according to one of Claims 1 to 5, **characterized in that** the block (4) forming the wedge is not engaged in the opening (3) separating the two shells (1, 2) but optionally attaches to said opening.

7. Method for fixing the blank of the strip according to Claim 6 on a projecting part (8) of a structure, particularly of a frame of an opening of automobile bodywork, with a view simultaneously to producing the corresponding strip and securing it to said projecting part, this method being **characterized in that**:
- the projecting part (8) is capped with said blank, with the two shells (1, 2) arranged on either side of the projecting part and the opening (3) separating the two shells substantially opposite the projecting part;
- the block (4) forming the wedge is then pushed into the opening (3) so as to displace, toward one another, through a tilting effect, the free ends of the two shells (1, 2), with a view to firmly pinching the projecting part (8).

8. Method according to Claim 7, **characterized in that** the block (4) forming the wedge is forcibly inserted into its housing with the aid of a roller (9) driven in rotation or of a vibrating hammer.

9. Method according to Claim 8, **characterized in that** the flanges (1a, 2a) of the shells (1, 2) are simultaneously compressed laterally toward one another by rollers (10, 11) driven in rotation.

## Patentansprüche

1. Dichtungsprofil mit einem U-förmigen oder Ω-förmigen Querschnitt, aus Elastomer oder Plastomer, ohne starre, zumindest teilweise in seiner Masse eingebettete Armierung, wobei dieses Profil möglicherweise ein an seiner Basis oder an einem seiner Arme anliegendes und in deren Außenrichtung vorspringendes Dichtungsorgan (6) umfasst, und wobei dieses Profil dafür bestimmt ist, einen vorspringenden Abschnitt (8) eines Aufbaus, insbesondere eines Rahmens der Öffnung einer Kraftfahrzeugkarosserie, abzudecken und ihn dabei festzuklemmen, und das **dadurch gekennzeichnet ist, dass** es umfasst:
- zwei Schalen (1, 2) aus Elastomer oder Plastomer, jeweils umfassend einen Flügel (1a, 2a) und einen angrenzenden Abschnitt (1b, 2b), der einen Abschnitt der Basis des Profils bildet, wobei die zwei Schalen vorzugsweise in einem Querschnitt des Profils im Wesentlichen symmetrisch angeordnet sind und wobei die eine Schale von der anderen durch eine Öffnung (3) getrennt ist, die quer zur Basis des Profils angelegt ist und sich longitudinal deren Mittelteil folgend erstreckt;
- eine Schicht (7) eines weichen, nicht oder wenig dehnbaren Materials, das auf das Innere der zwei Schalen (1, 2) auf eine Art aufgebracht ist, die die zwei Flügel (1a, 2a) und die angrenzenden Abschnitte (1b, 2b) der Basis des Profils miteinander jeweils einstückig macht;
- einen Klotz (4), der einen Feststellkeil bildet, dessen Querschnitt im Wesentlichen dem der die Schalen (1, 2) trennenden Öffnung angepasst ist, mit der er kraftschlüssig verbunden ist, wobei der Querschnitt der Öffnung (3) derart ist, dass, wenn der Klotz (4) eingebracht wird, er aufgrund der Schicht (7) aus weichem Material, das die zwei Schalen verbindet, eine Verschwenkbewegung dieser Schalen gegeneinander bewirkt, die die freien Enden der zwei Flügel des Profils einander annähert.

2. Profil nach Anspruch 1, **dadurch gekennzeichnet, dass** der Klotz (4), der den Feststellkeil bildet, und die Schalen (1, 2) aus der Durchführung einer Koextrusion herrühren.

3. Profil nach einem der Ansprüche 1 und 2, **dadurch gekennzeichnet, dass** das nicht oder wenig dehnbare Material eine SHORE A-Härte von ungefähr 80 bis 90 hat.

4. Profil nach einem der Ansprüche 1 bis 3, **dadurch gekennzeichnet, dass** ein Vlies oder ein Gewebe (16) aus einem nicht dehnbaren Material in der Schicht (7) aus nicht oder wenig dehnbarem Material eingebettet ist.

5. Profil nach einem der Ansprüche 1 bis 4 , **dadurch gekennzeichnet, dass** eine Schicht aus weichem Kitt (17) auf die Schicht (7) aus nicht dehnbarem Material zwischen den Flügeln (1a, 2a) der Schalen (1, 2) aufgetragen ist.

6. Rohling für ein Profil nach einem der Ansprüche 1 bis 5, **dadurch gekennzeichnet, dass** der einen Feststellkeil bildende Klotz (4) nicht in die die beiden Schalen (1, 2) trennende Öffnung (3) eingreift, sondern möglichst an dieser angrenzend angeordnet ist.

7. Verfahren zur Anbringung des Profilrohlings gemäß Anspruch 6 an einem vorspringendes Abschnitt (8) einer Struktur, insbesondere dem Rahmen der Öffnung einer Kraftfahrzeugkarosserie, im Hinblick darauf, gleichzeitig das zugehörige Profil zu realisieren und es mit diesem vorspringenden Abschnitt einstückig zu machen, wobei dieses Verfahren **dadurch gekennzeichnet ist, dass:**
- man den vorspringenden Abschnitt (8) mit dem genannten Rohling bedeckt, wobei die zwei Schalen (1, 2) auf der einen und der anderen Seite des vorspringenden Abschnitts angeordnet sind, und die Öffnung (3) die beiden Schalen mit Blick auf den vorspringenden Abschnitt wahrnehmbar trennt;
- und man anschließend den einen Feststellkeil bildenden Klotz (4) in die Öffnung (3) drückt, so dass die freien Enden der zwei Schalen (1, 2) durch den Effekt einer Verschwenkbewegung aufeinanderzu bewegt werden, mit dem Ziel, den vorspringenden Abschnitt (8) fest einzuklemmen.

8. Verfahren nach Anspruch 7, **dadurch gekennzeichnet, dass** der einen Feststellkeil bildende Klotz (4) durch Krafteinwirkung mit Hilfe einer sich drehenden Rolle (9) oder einem vibrierenden Hammer in seinen Sitz eingeführt wird.

9. Verfahren nach Anspruch 8, **dadurch gekennzeichnet, dass** die Flügel (1a, 2a) der Schalen (1, 2) gleichzeitig seitlich aufeinander zu durch zur Drehung angetriebene Rollen (10, 11) zusammengedrückt werden.
